(19) Europäisches Patentamt
European Patent Office
Office européen des brevets

(11) **EP 1 749 805 B1**

(12) **EUROPÄISCHE PATENTSCHRIFT**

(45) Veröffentlichungstag und Bekanntmachung des Hinweises auf die Patenterteilung:
**23.12.2015   Patentblatt 2015/52**

(51) Int Cl.:
***C04B 28/14*** (2006.01)     ***C04B 14/02*** (2006.01)
***C04B 20/02*** (2006.01)

(21) Anmeldenummer: **05016944.0**

(22) Anmeldetag: **04.08.2005**

(54) **GIPSBAUSTOFFE MIT ERHÖHTER WÄRMELEITFÄHIGKEIT UND ABSCHIRMUNG GEGEN ELEKTROMAGNETISCHE STRAHLEN.**

GYPSUM-BASED BUILDING MATERIAL WITH ENHANCED THERMAL CONDUCTIVITY AND ELECTROMAGNETIC SHIELDING.

MATÉRIAU DE CONSTRUCTION À BASE DE GYPSE, AYANT UNE CONDUCTIVITÉ THERMIQUE ET UN BLINDAGE ÉLECTROMAGNETIQUE AMELIORÉS.

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**07.02.2007   Patentblatt 2007/06**

(73) Patentinhaber:
• **SGL Carbon SE**
  **65201 Wiesbaden (DE)**
• **Saint-Gobain Rigips GmbH**
  **40549 Düsseldorf (DE)**

(72) Erfinder:
• **Guckert, Werner**
  **86674 Baar (DE)**
• **Spickermann, Winfried**
  **37619 Bodenwerner-Rühle (DE)**
• **Butz, Heinz-Joachim**
  **37619 Bodenwerner (DE)**
• **Duckwitz, Stephan**
  **37619 Pegestorf (DE)**
• **Ehlting, Dieter**
  **46397 Bocholt (DE)**

(56) Entgegenhaltungen:
**EP-A- 1 512 933     DE-A1- 10 049 230**

EP 1 749 805 B1

**Beschreibung**

Die vorliegende Erfindung betrifft Formassen und Formteile aus gipsbasierenden Baustoffen mit einer erhöhten Wärmeleitfähigkeit und Abschirmung gegen elektromagnetische Strahlen.

Beschreibung

Für den trockenen Innenausbau von Gebäuden werden vorwiegend Gipsplatten, speziell Cripsverbundplatten, Gipskartonplatten, Gipsfaserplatten und Gipsvliesplatten als Boden-, Wand- und Deckenverkleidungen eingesetzt, Darüber hinaus kommt Gips in Estrich für Fußböden sowie in Gipsputz und Gipsspachtelmassen zum Einsatz.

Gipsplatten und gipsbasierende Baustoffe werden in der Bautechnik fast ausschließlich zur Wärmedämmung eingesetzt, da das Material Gips aufgrund seiner Mikrostruktur sehr wenig wärmeleitfähig ist. Gemäß dem Stand der Technik liegt z.B. die Wärmeleitfähigkeit von Gipskartonplatten in der Größenordnung von ca 0,18 - 0,22 W/m*K.

Neben der Anwendung zur Wärmedämmung gibt es in der Bautechnik aber auch Einsatzfelder, für die eine erhöhte Wärmeleitfähigkeit erwünscht ist. Dafür sind herkömmliche Gipsbaustoffe und Gipsplatten aufgrund ihrer geringen Wärmeleitfähigkeit ungeeignet.

Darüber hinaus ist es für viele Anwendungen, z.B, für Räume, in denen sich EDV-Anlagen befinden, oder für Gebäude in der Nähe von Mobilfunk- oder anderen Sendestationen, wünschenswert, die elektromagnetische Abschirmung der verwendeten Baustoffe zu erhöhen. Gemäß dem Stand der Technik werden für diesen Zweck Gipskartonplatten mit Bleifolie kaschiert (Gips-Datenbuch, Bundesverband der Gipsindustrie 2003, S, 37).

Es ist aber auch bekannt, dass sich beide Aufgaben prinzipiell durch Zusatz von Kohlenstoff zu dem verwendeten Baustoff lösen lassen.

Beispielsweise sind aus der WO 99 62 076 A1 Gipskartonplatten bekannt mit einer den Gipskern umhüllenden 30 bis 80 $\mu$m dicken Schicht, welche neben Zellulosefasern einen trockenmassebezogenen Anteil von vorzugsweise 8 bis 15 % Kohlenstofffasern mit einem Durchmesser von 4 bis 10 $\mu$m und einer Länge von 2 bis 10 mm enthält. Dies führt zu einer Verbesserung der Abschirmwirkung gegen elektromagnetische Strahlen.

Carbonfasern sind jedoch relativ teuer. Außerdem sind Carbonfasern nahezu lineare Gebilde, d.h. sie haben nur eine sehr geringe Flächenausdehnung. An den Stoßkanten der Platten steht daher nur wenig Kontaktfläche für die Weiterleitung von Wärme oder elektromagnetischen Signalen zur Verfügung: zwischen senkrecht oder schräg zur Stoßkante orientierten Fasern gibt es nur dann Kontakt, wenn ein Faserende auf der Stirnfläche einer Platte genau auf ein Faserende auf der Stirnfläche der nächsten Platte stößt, und zwischen auf den aneinander stoßenden Stirnflächen der Platten liegenden Fasern gibt es nur dann Kontakt, sofern sich die Fasern treffen oder kreuzen.

EP 1 512 933 A2 offenbart Wärmeleitplatten aus verdichteten Graphitexpandat, dessen Schichtebenen parallel zur Fläche angeordnet sind. Vollständig expandierter Graphit wird unter gerichteter Einwirkung eines Druckes verdichtet, so dass sich die Schichtebenen des Graphits senkrecht zur Druckeinwirkungsrichtung anordnen, wobei sich die einzelnen Aggregate untereinander verhaken. Ohne Zusatz eines Bindemittels werden dadurch selbsttragende flächige Gebilde erzeugt.

WO 2004/065322 A1 offenbart ein elektrisch leitfähiges und elektromagnetische Strahlung abschirmendes gipsbasierendes Baumaterial. Die elektrische Leitfähigkeit und die abschirmende Wirkung wird durch Zusatz eines Gemischs aus Partikeln von Graphit mit einer Größe unter oder gleich 12 $\mu$m und amorphem Kohlenstoff erreicht. Der Anteil des Gemischs aus Graphit und amorphem Kohlenstoff beträgt 25 bis 75 % der Gesamtmasse des Baumaterials. Der Anteil des amorphen Kohlenstoffs wiederum beträgt 10 bis 95 % der Gesamtmasse des Gemischs aus Graphit und amorphem Kohlenstoff. Der amorphe Kohlenstoff enthält mindestens eine der Substanzen kalzinierter Koks und Aschen, die amorphen Kohlenstoff enthalten, der durch Verbrennung einer organischen Komponente hergestellt wurde.

Nachteilig an diesen Baumaterialien sind der relativ hohe Graphit-/Kohlenstoffanteil von über oder mindestens 25 % und die Notwendigkeit, bei der Herstellung des Materials mit sehr feinkörnigen und daher stark staubbildenden Substanzen zu hantieren. Feine Graphitpartikel und insbesondere amorpher Kohlenstoff lassen sich nur schwierig in eine wässrige Phase einmischen. Aufgrund ihrer relativ geringen Masse bei relativ großer Oberfläche und ihrer nur schwachen Benetzbarkeit mit Wasser neigen diese Teilchen stark zum Aufschwimmen. Zwar wurde in der genannten Patentanmeldung vorgeschlagen, bei der Herstellung des Materials den Gips erst mit den Zusätzen zu mischen, bevor Wasser hinzugefügt wird. Jedoch besteht, wenn die Gips-Graphit/Kohlenstoff Mischung mit Wasser in Verbindung gebracht wird, immer noch das Problem des Aufschwimmens der Kohlenstoff- oder/und der Graphitpartikel und damit einer zumindest teilweisen Entmischung des Baustoffs.

In der DE-A 100 49 230 wird vorgeschlagen. Estrichmateriallen wie Zement oder Gips zur Verbesserung der Wärmeleitfähigkeit einen trockenmassebezogenen Anteil von bis zu 50 %, vorzugsweise 5 bis 35 % Graphit zuzusetzen. Die Partikelgröße des Graphits soll im Bereich von 0,001 bis 1 mm, bevorzugt bis 0,5 mm liegen. Es wird besonders empfohlen, Blähgraphit zu verwenden. Dies wird folgendermaßen begründet: Blähgraphit besitzt zwar durch die offenporige schaumartige Struktur eine niedrigere Wärmeleitfähigkeit als das massive Graphitkorn, verbindet sich aber aufgrund seiner elastischen Eigenschaften und seiner Oberflächenstruktur inniger mit dem umgebenden Bindemittel. Das Bindemittel dringt zum Teil in das Blähgraphitteilchen ein. Die elastischen Eigenschaften des Blähgraphits kompensieren das Problem der unterschiedlichen Ausdehnungskoeffizienten von Bindemittel und Graphitteilchen und reduzieren damit den Effekt der thermischen Kontaktwiderstände an den Korngrenzen.

Herstellung und Eigenschaften von Blähgraphit werden in einer Technischen Information der Graphit Kropfmühl AG wie folgt beschrieben: Aufgrund der Schichtgitterstruktur von Graphit können Atome oder kleine Moleküle zwischen die Kohlenstoff-Schichten eingelagert (interkaliert) werden. Dadurch entsteht so genanntes Blähsalz oder GIC (Graphite Intercalation Compound). Hochwertige Blähgraphite weisen einen großen Anteil interkaliertex Schichten auf. Bei den eingelagerten Molekülen handelt es sich meist um Schwefel- oder Stickstoffverbindungen. Unter Hitzeeinwirkung werden die Schichten durch Thermolyse ziehharmonikaartig auseinandergetrieben, die Graphitflocken expandieren. Je nach Blähgraphitsorte kann die Expansion bereits bei ca. 150 °C einsetzen und nahezu schlagartig erfolgen. Bei freier Expansion kann das Endvolumen das Mehrhundertfache des Ausgangsvolumens erreichen. Die Eigenschaften des Blähgraphits, d.h. Starttemperatur und Blälvermögen, werden hauptsächlich von der Interkalationsgüte (wie viele der basisparallelen Schichten wurden interkaliert) und vom Interkalationsmittel bestimmt.

Nach der in der Veröffentlichung der Graphit Kropfmühl AG verwendeten Terminologie wird mit dem Begriff "Blähgraphit" offensichtlich die Vorstufe der Expansion, nämlich die expansionsfähige Graphitinterkalationsverbindung (das Graphitsalz), und nicht der expandierte Zustand bezeichnet. Die Verwendung solcher Graphitsalze als flammenhemmende Zusätze für Baustoffe ist Stand der Technik.

Der Hinweis auf die offenporige schaumartige Struktur des Blähgraphits in DE-A 100 49 230 deutet aber darauf hin, dass hier nicht das noch blähfähige Graphitsalz, sondern vielmehr die bereits expandierte Form des Blähgraphits (im folgenden der Klarheit halber als Graphitexpandat bezeichnet) gemeint war. Die im Ergebnis der thermischen Expansion erhaltenen würmchen- oder ziehharmonikaförmigen Partikel sind sehr voluminös. Die Schüttdichte von Graphitexpandat ist mit 2 bis 20 g/l sehr gering. Daher bereitet das Fördern und Dosieren von Patrikeln aus expandiertem Graphit erhebliche technische Schwierigkeiten und das Einmischen in die wässrige Phase wird durch das Aufschwimmen der leichten, voluminösen Expandatteilchen extrem behindert. Eine homogene Verteilung von Graphitexpandat im Gips oder Zement ließe sich daher schwerlich erreichen. Ein weiteres Problem ist die starke Staubentwicklung beim Hantieren mit Graphitexpandat. Daher ist es eher unwahrscheinlich, dass sich wärmeleitende Zusätze aus Graphitexpandat für Baustoffe in der Praxis als geeignet erweisen werden.

Tatsächlich wurde für die Ausführungsbeispiele der vorgenannten Patentanmeldung dem Estrich auch nicht Graphitexpandat zugesetzt, sondern fein gemahlener Naturgraphit mit einer Partikelgröße kleiner als 0,05 mm (Fabrikat EDM von Graphit Kropfmühl AG). Damit wurde eine Erhöhung der Wärmeleitfähigkeit des Estrichs von 1 bis 1,4 W/m*K auf 2 bis 2,8 W/m*K erreicht.

Aus dem vorstehend beschriebenen Stand der Technik stellte sich die Aufgabe, ein wärmeleitendes und elektromagnetisch abschirmendes Additiv für gipsbasierende Baustoff-Formmassen und daraus hergestellte Formteile zu finden, mit dem sich die Nachteile des Standes der Technik überwinden lassen.

Dieses Additiv soll bereits in relativ geringen Masseanteilen eine sigoifdmnte Erhöhung der Wärmeleitung und der Dämpfung elektromagnetischer Strahlung bewirken. Darüber hinaus soll es ohne besondere Vorkehrungen hinsichtlich Staubabsaugung usw. handhabbar sein, sich leicht fördern, dosieren und einmischen lassen, insbesondere auch im wässrigen Medium. Außerdem sollte das Additiv die Eigenschaften des Gipses möglichst wenig beeinflussen und insbesondere nicht die mechanische Stabilität der Bauformteile beeinträchtigen. Weiterhin ist es erwünscht, dass sich die das Additiv enthaltenden Bauformteile, beispielsweise GipskarEvnplatten, im wesentlichen mit derselben Technologie und - abgesehen von den nötigen Vorrichtungen für die Zudosierung des Additivs - mit derselben Ausrüstung wie entsprechende herkömmliche Baufonnteile herstellen lassen.

Die Lösung der Aufgabe besteht darin, gipsbasierenden Baustoffen Mahlgut aus kompaktiertem Graphitexpandat zuzusetzen, Der trockenmassebezogene Anteil dieses Additivs am Gipsbaustoff beträgt 5 bis 50 %, bevorzugt jedoch nicht mehr als 25 %.

Weitere Vorteile, Details und besondere Ausführungsformen der vorliegenden Erfindung können der folgenden ausführlichen Beschreibung und den Ausführungsbeispielen entnommen werden.

Das in der vorliegenden Erfindung eingesetzte Additiv ist erhältlich durch thermische Expansion einer blähfähigen Graphiteinlagerungsverbiudung zu Graphitexpandat und

Wiederverdichten des Craphitexpandats zu einem flächigen Gebilde, das anschließend zu Partikeln der gewünschten Komgröße gemahlen wird. Bevorzugt werden im wesentlichen plättchenförmige Partikel mit einem Durchmesser von 1 bis 5 mm. Die Schüttdichte beträgt 0,12 bis 0,25 g/cm$^3$.

Das graphitbasierende Additiv für gipsbasierende Baustoff-Formmassen gemäß der vorliegenden Erfindung weist gegenüber den aus dem Stand der Technik bekannten Kohlenstoff- bzw. Graphitadditiven eine Reihe von Vorteilen auf.

Die Additivteilchen sind aufgrund der Verdichtung relativ kompakt. Daher neigen sie kaum zur Staubbildung, sind leicht handhab-, förder-, dosier- und einmischbar. Insbesondere lassen sie sich ohne das Problem des Aufschwimmens im wässrigen Medium in Gipsmassen o.ä. einmischen.

Mit einem Teilchendurchmesser von 1 bis 5 mm sind die Partikel im Vergleich zu denen aus dem Stand der Technik bekannter Additive relativ groß. Dies ist ein besonderer Vorteil, denn eine hohe Teilchengröße der Additivpartikel erleichtert die Bildung eines leitfähigen Perkolationsnetzwerks in einer nicht leitfähigen Matrix.

Es ist allgemein bekannt, dass bei Teilchenverbundwerkstoffen aus einer wenig elektrisch bzw. thermisch leitfähigen Matrix und einem elektrisch bzw. thermisch leitfähigem Additiv die elektrische bzw. thermische Leitfähigkeit eine Funktion des Anteils dieses Additivs ist. Dabei nimmt die Leitfähigkeit nicht linear mit dem Anteil des leitfähigen Additivs zu, sondern steigt signifikant beim Erreichen der Perkolationsschwelle, d.h. sobald der Anteil an leitfähigem Additiv groß genug ist, um ein durchgehendes Netzwerk an Leitungspfaden auszubilden. Weiterer Additivzusatz über die Perkvlationsschwelle hinaus bewirkt nur noch einen geringen Anstieg der Leitfähigkeit.

Die Fähigkeit zur Netzwerkbildung und damit der zum Erreichen der Perkolationsschwelle nötige Anteil des leitfähigen Additivs hängt sehr stark von der Teilchengröße und der Teilchengrößenverteilung der Additivpartikel ab. Additive aus großen Teilchen mit breiter Teilchengrößenverteilung bilden bereits bei geringerem Anteil in der Matrix durchgehende Netzwerke als Additive aus kleinen Teilchen mit enger Teilchengrößenverteilung.

Additive aus großen voluminösen Teilchen wie Graphitexpandat lassen sich jedoch aufgrund ihrer niedrigen Schüttdichte nur schwierig in eine die Matrix bildende Formmasse einmischen. Die Schüttdichte des in der vorliegenden Erfindung verwendeten Additivs liegt mit 0,12 bis 0,25 g/cm$^3$ im Bereich zwischen den beiden Grenzfällen Graphitexpandat (0,002 bis 0,02 g/cm$^3$) und Naturgraphit (ca. 0,4 bis 0,7 g/cm$^3$) bzw. synthetischer Graphit (0,8 bis 0,9 g/cm$^3$).

Durch die Verdichtung des Graphitexpandats werden die nachteiligen Eigenschaften von Graphitexpandat eliminiert, ohne dabei dessen Vorteile zu verlieren. Im Gegensatz zu den voluminösen Graphitexpandat-Partikeln werden leicht handhabbare Partikel erhalten, die im wässrigen Medium nicht aufschwimmen und sich daher ohne Schwierigkeiten in herkömmliche Fonnmassen einmischen lassen. Außerdem bewirkt die Verdichtung des Graphitexpandats eine signifikante Erhöhung der Wärmeleitfähigkeit in den Partikeln.

Andererseits weist auch kompaktiertes Graphitexpandat noch in hohem Maße die aus DE-A 100 49 230 bekannten Vorteile des unverdichteten Graphitexpandats auf, nämlich eine gewisse Elastizität und leichte Tränkbarkeit mit einem Bindemittel. In diesem Zusammenhang sei darauf verwiesen, dass der gleichfalls durch Verdichtung von Graphitexpandat hergestellte, insbesondere aus der Dichtungstechnik bekannte Werkstoff Graphitfolie ebenfalls in gewissem Maße elastisch ist sowie mit Bindemitteln o.ä. Substanzen unter Aufnahme von bis zu 100 % seiner eigenen Masse imprägniert werden kann.

Ein weiterer Vorteil des Mahlguts aus kompaktiertem Graphitexpandat besteht darin, dass seine Hygroskopizität ähnlich der von Gips ist. Daher wird die raumklimatisierende Wirkung der gipsbasierenden Baustoffe, durch den Zusatz nicht herabgesetzt, wie das bei anderen Zusätzen (Carbonfasera, synthethischer Graphit, Ruß u.ä.) der Fall wäre

Außerdem wirken die Graphitpartikel bindend und schmierend. Dadurch sind die Staubbelastung und Werkzeugabnutzung bei der mechanischen Bearbeitung erfindungsgemäßer Formteile wie z,B, Gipsplatten geringer. Aus dem Stand der Technik bekannte Additive (Ruß, Carbonfasera) haben keine derartige Wirkung, und der bei der Bearbeitung von Formteilen, welche diese Substanzen enthalten, entstehende Staub ist wegen des Gehalts an Carbonfasenu oder sehr feinen Kohlenstoffpartikeln gesundheitsgefährdend, so dass bei der Bearbeitung besondere Schutzvorkehrungen getroffen werden müssten.

Die ersten beiden Schritte des Prozesses der Erzeugung des Additivs sind aus der Produktion von Graphitfolie bekannt. Dabei wird aus Naturgraphit eine Interkalationsverbindung hergestellt, diese thermisch expandiert und die Expandatpartikel werden anschließend zu einem flächigen Gebilde mit einer Dicke zwischen 0,1 und 3 mm, bevorzugt maximal 1 mm und einer Dichte zwischen 0,8 und 1,8 g/cm$^3$ verdichtet.

Das Aufmahlen des verdichteten Graphitexpandats erfolgt in einer Schneidmühle, bevorzugt mit Sieben mit einer Maschenweite zwischen 2 und 4 mm. Dabei werden vorwiegend Partikel mit einem Durchmesser zwischen 1 und 5 mm erhalten.

Der Anteil des Mahlguts aus kompaktiertem Graphitexpandat kann in begrenztem Umfang durch gemahlenen Naturgraphit ersetzt werden, ohne dass es zu signifikanten Einbußen bei der erreichbaren Verbesserung der Wärmeleitfähigkeit kommt. Bei einem massebezogenen Additivanteil am Baustoff von 25 % beträgt beispielsweise der Anteil des Mahlguts aus kompaktiertem Graphitexpandat an der Gesamtmasse des Baustoffs 5 % und der Anteil des gemahlenen Naturgraphits 20 %. D.h. in diesem Fall ist das Mahlgut aus kompaktiertem Graphitexpandat zu 80 % durch gemahlenen Naturgraphit ersetzt. Dies ist ein wirtschaftlicher Vorteil, da gemahlener Naturgraphit wegen des Verzichts auf den Expansions- und

Kompaktierungsprozess preisgünstiger ist. Die Anteile von Mahlgut aus kompaktiertem Graphitexpandat und gemahlenem Naturgraphit wird der Fachmann je nach Anwendungsfall wählen unter Berücksichtigung der gewünschten Produkteigenschaften (erforderliche Wärmeleitfähigkeit usw.) und der Verfügbarkeit der Materialien.

Darüber hinaus ist die Kombination von Mahlgut aus kompaktiertem Graphitexpandat mit anderen wärmeleitenden Additiven wie Naturgraphit vorteilhaft, weil dadurch die Breite der PardkelgröBenverteilung des Additivs vergrößert wird. Dies wiederum erleichtert die Bildung eines Perkolationsnetzwerks, denn die durch Aufmahlen von kompaktiertem Graphitexpandat erhaltenen ausgedehnten Partikel können Leitungsbtücken zwischen den kleineren Partikeln aus Naturgraphit bilden.

Andere Additive, die dem Mahlgut aus kompaktiertem Graphitexpandat zugemischt werden können, um die thermische und elektrische Leitfähigkeit gipsbasierender Baustoffe zu erhöhen, sind Kohlenstoff- und Metallfasern.

Das Mahlgut aus verdichtetem Graphitexpandat wird erfindungsgemäß gipsbasierenden Baustoffen zugesetzt. Das Mahlgut wird in einer solchen Menge in den Baustoff eingemischt, dass sein Anteil an der Trockenmasse des Baustoffs 5 bis 50 % beträgt. Unter gipsbasierenden Baustoffen werden hier Mischungen aus Gips und den üblichen Zuschlagstoffen verstanden. Diese kommen entweder als Formmassen wie Gipsspachtclmassen, Gipsputzmassen, Gipsestrich o.ä. zum Einsatz oder dienen -ggf. kombiniert mit anderen Bestandteilen- als Ausgangsmaterial zur Herstellung von Formteilen wie beispielsweise Gipsplatten, speziell Gipskarton-, Gipsfaser- und Gipsvliesplatten sowie Gipsverbundplatten. Die erfindungsgemäßen Fonnteile enthalten also einen gipsbasierenden Baustoff, welcher einen Zusatz von gemahlenem kompaktiertes Graphitexpandat in einem Anteil von 5 bis 50 % der Trockenmasse des gipsbasierenden Baustoffs enthält.

Darüber hinaus betrifft die Erfindung auch Verbundbauteile aus mindestens einem Fortuteil, das einen gipsbasierendm Baustoff mit einem Zusatz von Mahlgut aus kompaktiertem Graphitexpandat in einem Anteil von 5 bis 50 % der Trockenmasse des Baustoffs enthält, und mindestens einem Formteil, das keinen gipsbasierenden Baustoff enthält. Dieses keinen gipsbasierenden Baustoff enthaltende Formteil kann beispielsweise eine Hartfaseiplatte, eine Platte aus einem Wännedämmmatcrial, eine Fliese, ein Schamott- oder ein Porenbetonstein o.ä. sein.

Erfindungsgemäße Cripsplatten können beispielsweise für die abschirmende Ummantelung von Kabelschächten in Gebäuden verwendet werden.

Die erfindungsgemäßen Formteile, z.B. Gipskartonplatten zeichnen sich nicht nur durch eine signifikant höhere Wärmeleitfähigkeit aus, sondern auch durch eine sehr gleichmäßige Aufheizung und Wärmeverteilung innerhalb der Platten bzw. Formteile. Dieser Effekt konnte mittels thermographischer Untersuchungen nachgewiesen werden. Die gleichmäßige Aufheizung der erfindungsgemäßen Gipskarton-Platten in der Fläche bewirkt z.B. bei auf eine Teilfläche der Platte begrenzter Sonneneinstrahlung eine wirksame Verteilung der Wärme auf die gesamte Platte.

Bei gleichzeitiger Anwendung einer erfindungsgemäßen Gipsspachtel- oder Cripsputzmasse wird so z.B. die gesamte Wandfläche eines Wohnbereiches schneller und gleichmäßiger erwärmt und Stellen lokal tieferer Temperaturen, verursacht beispielsweise durch Schlagschatten oder, Bauteilübergänge, verringert. Dies führt in günstigen Fällen sogar dazu, dass Schimmelpilzbildung bedingt durch eine lokal niedrigere Bauteilteinperaturen reduziert bzw. verhindert wird. Auch beim Einsatz von flächigen Heiz- und Kühlkörpem bzw, von Klimaelementen und -bauteilen ist der Vorteil der sehr guten Wärmeleitung und der flächigen Verteilung der Wärme in den erfindungsgemäßen Formteilen und Baustoffen von erheblichen Nutzen, denn die verbesserte Wänneausbreitung wiederum erlaubt es, die vom Heizmedium durchströmten Rohre in einem Muster (Mäander, Spirale, Gitter o.ä.) mit weiteren Maschen zu verlegen als in einem herkömmlichen Baumaterial, so dass weniger Rohrleitung benötigt wird.

Ggf. sind die erfindungsgemäßen Gipsplatten o.a. Formteile komplett oder teilweise mit Kunststoffen, beispielsweise Harzen oder Thermoplasten imprägniert, um ihre Dichtigkeit und Beständigkeit gegen mechanische und andere Umwelteinwirkungen zu erhöhen.

Alternativ oder zusätzlich können eine oder mehrere Oberflächen der Gipsplatten o.a. Formteile partiell oder komplett mit Anstrichen, Überzügen oder Beschichtungen versehen sein, die bestimmte Funktionen erfüllen wie u.a. Verbesserung der Optik, Erleichterung der Handhabbarkeit, Brandschutz, Wirkung als Wasserdampfsperre, Verbesserung der Wärmedämmung nach außen und Schalldämmung oder Verminderung der Stoßempfindlichkeit. Beispiele für solche Beschichtungen sind u.a. Lackschichten, Überzüge aus Kunststoff, Kaschierungen mit Papier, Holzfurnier, Folien aus Metall oder Kunststoff, Blechen, Metallbändern, Geweben oder flächigen textilen Gebilden.

Darüber hinaus sind Beschichtungen, die einen Klebstoff, einen Haftvermittler oder ein Bindemittel enthalten, möglich. Diese Beschichtungen können der Herstellung eines Verbunds zwischen erfindungsgemäßen Formteilen oder von erfindungsgemäßen Formteilen mit anderen Baufvrmteilen wie beispielsweise Schamottsteinen, Porenbetonsteinen oder Fliesen dienen.

Die Erfindung wird im folgenden beispielhaft anhand von Gipskartonplatten beschrieben, dies ist jedoch aufgrund ihrer allgemeinen Eignung für alle Arten von gipsbasierenden Baustoffen nicht einschränkend zu verstehen.

Die Herstellung von Gipskartonplatten ist bekannt. Gipskartonplatten werden in der Regel aus Stuckgips und Zusatzstoffen für den Gipskern sowie hochwertigem Karton auf Bandanlagen im kontinuierlichen Betrieb hergestellt.

Bei der Herstellung der Gipskartonplatten wird zunächst der Karton von unten zugeführt, der die Sichtseite der Platte bildet. Für die Kantenumformung wird dieser angeritzt. Danach erfolgt der Zulauf des Gipsbreis, der mittels Formstationen verteilt wird. Diesem Gipsbrei ist das wärmeleitende und elektrisch abschirmende Additiv, dessen Herstellung vorstehend bescbrieben wurde, zugesetzt. Gleichzeitig erfolgt der Kartonzulauf von oben. Der noch sehr feuchte Gipskartonstrang durchläuft die Abbindestrecke, an deren Ende mit einer Schneidvorrichtung einzelne Platten abgelängt werden. Länge und Bandgeschwindigkeit der Abbindestrecke sind auf das Abbiuadeverhalten des Gipskems abgestimmt. Ein Wendetisch führt die Platten einem Mehretagentrvckner zu. Nach dem Trocknen der Platten werden diese an den Querkanten besäumt und gebündelt.

Optional werden die Gipskartonplatten mit Nuten, Fugen oder Durchbrüchen versehen. So ist es beispielsweise bekannt, eine einseitig kartonierte Gipsschicht mit Fugen zu versehen, die sich durch den Gipskern bis an die Kartonschicht heran erstrecken. So wird ein rollbares Gipskaitonmaterial erhalten.

Ausführungsbeispiele

Korngrößenverteilung des Additivs

Eine Mischung aus kompaktiertem Graphitexpandat mit einer Dicke zwischen 0,1 mm und 1 mm wurde in einer Schneidmühle mit einem Sieb von 3 mm Maschenweite gemahlen.

Die Teilchengrößenverteilung des Mahlguts wurde mittels Siebanalyse bestimmt. Das Resultat der Siebanalyse ist in Tabelle 1 angegeben. Ungefähr zwei Drittel aller Partikel haben einen Durchmesser größer als 1 mm.

Tabelle 1: Korngrößenverteilung des Mahlguts

| Fraktion/mm | prozentualer Anteil |
|---|---|
| < 0,2 | 2 |
| 0,2 - 0,5 | 10 |
| 0,5 - 1,0 | 22 |
| 1,0 - 2,0 | 49 |
| 2,0 - 3,15 | 16 |
| 3,15 - 5,0 | 1 |
| 5,0 - 8,0 | 0 |
| > 8,0 | 0 |

Wärmeleitfähigkeit der erfindungsgemäßen Gipskartonplatten

Für erfindungsgemäße Gipskartonplatten mit verschiedenem Gehalt des wärmeleitenden Additivs wurden die Wärmeleitfähigkeit senkrecht zur Plattenebene für die kartonumhüllte Platte, die Wärmeleitfähigkeit des Gipskems (d.h. ohne Einfluss der Kartonumhüllung) und die Wärmeleitfähigkeit parallel zur Plattenebene bestimmt. Zum Vergleich wurden auch herkömmliche Gipskartonplatten untersucht sowie Gipskartonplatten, in denen das Additiv vollständig oder teilweise durch gemahlenen Naturgraphit, der vorwiegend Partikel im Größenbereich von 180 bis 300 $\mu$m enthielt, ersetzt war.

Zur Messung der Wärmeleitfähigkeit senkrecht zur Plattenebene wurde eine Einplattenapparatur verwendet. Diese besteht aus einer elektrisch beheizten quadratischen Zentralplatte von 20 cm Länge, umgeben von einem 6 cm breiten ersten rahmenförmigen Schutzring und einem thermostatiertem zweiten Schutzring, sowie einer thermostatierten Kühlplatte. Die Schutzringe gewährleisten einen eindimensionalen vertikalen Wärmefluss im Bereich der Messfläche. Die Probe befindet sich zwischen der heißen Seite der Apparatur (umfassend die Zentralplatte und den ersten Schutzring) und der Kühlplatte. Zentralplatte und erster Schutzring werden elektrisch auf die Temperatur $T_h$ geheizt. Die Kühlplatte wird auf die Temperatur $T_c$ gekühlt. Aus der elektrischen Leistung $P_{el}$ und der Fläche $A$ der Zentralplatte mit den Temperaturen $T_h$ und $T_c$ berechnet sich der Wärmedurchlasswiderstand $1/\Lambda$ der untersuchten Probe wie folgt:

$$\frac{1}{\Lambda} = \frac{A*(T_h - T_c)}{P_{el}}$$

Bei bekannter Probendicke lässt sich aus dem experimentell bestimmten Wärmedurchlasswiderstand $1/\Lambda$ die Wärmeleitfähigkeit der Probe senkrecht zur Plattenebene) berechnen:

$$\lambda = \Lambda*d = \frac{P_{el}*d}{A*(T_h - T_c)}$$

Die so gemessenen Werte enthalten stets auch Anteile der Kartonumhüllung, die als serieller Widerstand wirkt.

Die Wärmeleitfähigkeit des Kemmatenals wurde nach der dynamischen Hitzedraht-Methode bestimmt. Dabei dient ein in die Probe eingebetteter Hitzedraht (Platindraht mit 100 $\mu$m Durchmesser und 6 cm Länge) gleichzeitig als Heizelement und als Temperatursensor. Während der Messung wird der Draht mittels einer Konstantleistungsquelle einer konstantenelektrischen Leistung beheizt. Die zeitliche Entwicklung der mittleren Temperatur des Hitzedrahts, die von der Wärmeleitfähigkeit der Probe anhängt, lässt sich anhand des temperaturabhängigen Drahtwiderstands erfassen.

Für diese Messungen wurden die Probenplatten halbiert, und der Hitzedraht wurde jeweils zwischen den beiden Hälften der Probenplatte, von denen jeweils an der dem Draht zugewandten Oberfläche die Kartonumhüllung entfernt worden war, eingebettet.

Die Messergebnisse sind in Tabelle 2 zusammengestellt.

Tabelle 2 Wärmeleitfähigkeit von Gipskartonplattten mit verschiedenen Additiven

| Zusammensetzung und massebezogener Gehalt /% des Additivs | Wärmeleitfähigkeit | |
|---|---|---|
| | senkrecht zur Plattenebene/ [W/(m*K)] | Gipskern / [W/(m*K)] |
| 0 | 0,231 $\pm$ 0,012 | 0,385 $\pm$ 0,019 |
| 5 (kompaktiertes Graphitexpandat) | 0,373 $\pm$ 0,019 | |
| 10 (kompaktiertes Graphitexpandat) | 0,466 $\pm$ 0,023 | 1,097 $\pm$ 0,055 |
| 15 (kompaktiertes Graphitexpandat) | 0,476 $\pm$ 0,024 | |
| 15 (gemahlener Naturgraphit) | 0,398 | |
| 17 (kompaktiertes Graphitexpandat) | 0,453 $\pm$ 0,021 | |
| 20 (kompaktiertes Graphitexpandat) | 0,417 $\pm$ 0,021 | 1,090 $\pm$ 0,055 |
| 20 (Naturgraphit) + 5 (kompaktiertes Graphitexpandat) | 0,41 $\pm$ 0,03 | |

Bereits ein trockenmassebezogener Gehalt von 10 % Mahlgut aus kompaktiertem Graphitexpandat bewirkte eine Verdopplung der Wärmeleitfähigkeit senkrecht zur Plattenebene der kartonumhüllten Platte. Wird allein die Wärmeleitfähigkeit des Kems gemessen, so ist der Effekt wegen des Fehlens der als serieller Widerstand wirkenden Kattonurnhüllung sogar noch deutlicher: ein Additivgehalt von 10 % bewirkt fast eine Verdreifachung der Wärmeleitfähigkeit des Kemmaterials senkrecht zur Plattenebene.

Weitere Steigerung des massebezogenen Additivgehalts auf bis zu 20 % bewirkt (im Rahmen der Messgenauigkeit) keine signifikante Steigerung der Wärmeleitfähigkeit mehr, Dies deutet darauf hin, dass bereits bei einem massebezogenen Anteil von 10 bis 15 % Mahlgut aus kompaktiertem Graphitexpandat die Perkolationsschwelle erreicht wird.

Wird stattdessen dem Gipskern gemahlener Naturgraphit zugesetzt, so lässt sich bei einem vergleichbaren massebezogenen Additivgehalt (15 %) keine so große Steigerung der Wärmeleitfähigkeit erreichen.

Mit einerMischung von Mahlgut aus kompaktiertem Graphitexpandat und aus Naturgraphit wird jedoch eine ähnliche Steigerung der Wärmeleitfähigkeit bewirkt wie mit einem nur Mahlgut aus kompaktiertem Graphitexpandat enthaltenden Zusatz. Dies lässt sich auf die Erleichterung der Bildung von Perkolationsnetzwerken bei breiter Partikelgrößenverteilung zurückfuhren.

Schirmdämpfung der erfindungsgemäßen Gipskartonplatten

Die Messung der Schirmdämpfung von herkömmlichen Gipskartonplatten sowie Gipskartonplatten mit verschiedenen Anteilen an Mahlgut aus kompaktiertem Graphitexpandat erfolgte in Anlehnung an DIN EN 50147-1 bei Frequenzen der Feldtypen magnetisches Feld, ebene

Welle sowie Mikrowelle (s. Tabelle 3).

Der Messaufbau umfasst Signalgenerator, Sendeantenne, Empfangsantenne und Spektrumanalysator. Die Probe befindet sich zwischen Sende- und Empfangsantenne.

Für jede Messfrequenz erhält man die Schirmdämpfung $S$ des zu untersuchenden Materials (Tabelle 3) als Differenz von zwei Messungen der Streckendämpfung, nämlich der Streckendämpfung $P_0$ ohne das zu untersuchende dämpfende Material und der Streckendämpfung $P_s$ mit der in der Messapparatur eingebauten Probe des zu untersuchenden Materials. Der Abstand, die Orientierung und die Polarisation der Antennen sowie die Ausgangsleistung des Signalgenerators sind bei beiden Messungen gleich.

Tabelle 3 Messwerte der Schirmdämpfung/[dB]

| massebezogener Additivgehalt / % | magnetisches Feld | | | | ebene Welle | | | Mikrowelle | |
|---|---|---|---|---|---|---|---|---|---|
| | 10 kHz | 156 kHz | 1 MHz | 10 MHz | 107 MHz | 407 MHz | 997 MHz | 10 GHz | 18 GHz |
| 0 | 0 | 0 | 0 | 0 | 0 | 0 | 0 | 0 | 0 |
| 5 | 0 | 0 | 0 | 0 | 2 | 9 | 8 | 18 | 34 |
| 10 | 0 | 0 | 0 | 0 | 6 | 18 | 15 | 31 | 56 |
| 15 | 0 | 0 | 0 | 0 | 13 | 26 | 23 | 46 | 70 |
| 17 | 0 | 0 | 0 | 0 | 16 | 28 | 24 | 43 | 60 |
| 20 | 0 | 0 | 0 | 0 | 18 | 29 | 27 | 51 | 68 |

Während Gipskartonplatten ohne Additiv in keinem der untersuchten Frequenzbereiche abscbitmend wirken, kann durch den Zusatz von Graphit eine Schinndampnmg in den Frequenzbereichen ebener Wellen und Mikrowellen erreicht werden. Die Schirmdämpfung steigt mit zunehmendem Anteil des Additivs, jedoch ist der Zuwachs der Schizmdämpfung bei massebezogenen Additivgehalten oberhalb von 15 % deutlich geringer als bei massebezogenen Additivgehalten bis 15 %. Dies deutet auf das Überschreiten einer Perkolationsschwelle bin, wie sie auch für die Wärmeleitfähigkeit beobachtet wurde.

**Patentansprüche**

1. Gipsbasierender Baustoff, **dadurch gekennzeichnet, dass** der gipsbasierende Baustoff gemahlenes kompaktiertes Graphitexpandat in einem Anteil von 5 bis 50 %, bevorzugt maximal 25 % bezogen auf die Trockenmasse des Baustoffs enthält.

2. Gipsbasierender Baustoff nach Anspruch 1, **dadurch gekennzeichnet, dass** das Mahlgut aus kompaktiertem Graphitexpandat eine Schüttdichte zwischen 0,12 und 0,25 g/cm$^3$ hat.

3. Gipsbasierender Baustoff nach Anspruch 1, **dadurch gekennzeichnet, dass** das Mahlgut aus kompaktiertem Graphitexpandat plättchenförmige Partikel mit einem Durchmesser zwischen 1 und 5 mm enthält.

4. Gipsbasierender Baustoff nach Anspruch 1, **dadurch gekennzeichnet, dass** dem Mahlgut aus kompaktiertem Graphitexpandat gemahlener Naturgraphit zugemischt ist.

5. Gipsbasierender Baustoff nach Anspruch 1, **dadurch gekennzeichnet, dass** dem Mahlgut aus kompaktiertem Graphitexpandat Metall- oder Kohlenstofffasern zugemischt sind.

6. Gipsbasierender Baustoff nach Anspruch 1, **dadurch gekennzeichnet, dass** es sich um Gipsspachtelmasse, Gipsputzmasse oder Gipsestrich handelt.

7. Verfahren zur Herstellung von gipsbasierenden Baustoffen gemäß Anspruch 1, umfassend die Schritte
Herstellung einer Graphit-Interkalationsverbindung,
thermische Expansion der Interkalationsverbindung zu Graphitexpandat, Verdichtung des Graphitexpandates zu einem flächigen Gebilde mit einer Dicke zwischen 0,1 und 3 mm, bevorzugt maximal 1 mm, und einer Dichte zwischen 0,8 und 1,8 g/cm$^3$,
Aufmahlen des verdichteten Graphitexpandats,
Einmischung des Mahlguts in einen gipsbasierenden Baustoff in einer solchen Menge, dass der trockenmassebezogene Anteil des Mahlguts 5 bis 50 % beträgt.

8. Formteil, **dadurch gekennzeichnet, dass** es einen gipsbasierenden Baustoff nach Anspruch 1 aufweist.

9. Formteil nach Anspruch 8, **dadurch gekennzeichnet, dass** das Mahlgut aus kompaktiertem Graphitexpandat eine Schüttdichte zwischen 0,12 und 0,25 g/cm$^3$ hat.

**10.** Formteil nach Anspruch 8, **dadurch gekennzeichnet, dass** das Mahlgut aus kompaktiertem Graphitexpandat plättchenförmige Partikel mit einem Durchmesser zwischen 1 und 5 mm enthält.

**11.** Formteil nach Anspruch 8, **dadurch gekennzeichnet, dass** dem Mahlgut aus kompaktiertem Graphitexpandat gemahlener Naturgraphit zugemischt ist.

**12.** Formteil nach Anspruch 8, **dadurch gekennzeichnet, dass** dem Mahlgut aus kompaktiertem Graphitexpandat Metall- oder Kohlenstofffasern zugemischt sind.

**13.** Formteil nach Anspruch 8, **dadurch gekennzeichnet, dass** es sich um Gipsplatten, Gipsverbundplatten, Gipskartonplatten, Gipsfaserplatten und Gipsvliesplatten handelt.

**14.** Formteil nach Anspruch 8, **dadurch gekennzeichnet, dass** es sich um ein Verbundbauteil aus mindestens einem Formteil handelt, das einen gipsbasierenden Baustoff enthält, und mindestens einem Formteil, das keinen gipsbasierenden Baustoff enthält.

**15.** Formteil gemäß Anspruch 8, **dadurch gekennzeichnet, dass** das Formteil eine Imprägnierung aufweist.

**16.** Formteil gemäß Anspruch 8, **dadurch gekennzeichnet, dass** eine oder mehrere Oberflächen des Formteils komplett oder teilweise mit einem Anstrich, einem Überzug oder einer Beschichtung versehen sind.

**17.** Formteil gemäß Anspruch 8, **dadurch gekennzeichnet, dass** eine oder mehrere Oberflächen des Formteils komplett oder teilweise mit Papier, Holzfurnier, Folien aus Metall oder Kunststoff, Blechen, Metallbändern, Geweben oder anderen textilen flächigen Gebilden kaschiert sind.

**18.** Formteil gemäß Anspruch 8, **dadurch gekennzeichnet, dass** eine oder mehrere Oberflächen des Formteils teilweise oder komplett mit einem Klebstoff, einem Haftvermittler oder einem Bindemittel beschichtet sind.

**19.** Formteil gemäß Anspruch 8, **dadurch gekennzeichnet, dass** in das Formteil Rohrleitungen eingebettet sind.

**20.** Verwendung von Formteilen gemäß Anspruch 8 für die Ummantelung von Kabelschächten.

**21.** Verwendung von Formteilen gemäß Anspruch 8 in Fussboden-, Decken- oder Wandheizungen oder Klimadecken.

**22.** Verfahren zur Herstellung von Formteilen aus gipsbasierenden Baustoffen gemäß Anspruch 8, umfassend die Schritte Herstellung einer Graphit- Interkalationsverbindung,
thermische Expansion der Interkalationsverbindung zu Graphitexpandat, Verdichtung des Graphitexpandates zu einem flächigen Gebilde mit einer Dicke zwischen 0,1 und 3 mm, bevorzugt maximal 1 mm, und einer Dichte zwischen 0,8 und 1,8 g/cm$^3$,
Aufmahlen des verdichteten Graphitexpandats,
Einmischung des Mahlguts in einen gipsbasierenden Baustoff in einer solchen Menge, dass der trockenmassebezogene Anteil des Mahlguts 5 bis 50 % beträgt,
Herstellung von Formteilen aus dem einen trockenmassebezogenen Anteil von 5 bis 50 % Mahlgut aus kompaktierten Graphitexpandat enthaltenden gipsbasierenden Baustoff und ggf. weiteren Bestandteilen.

**Claims**

**1.** Gypsum-based building material, **characterised in that** said gypsum-based building material contains ground compacted expanded graphite in a proportion of from 5 to 50 %, preferably at most 25 %, based on the dry mass of the building material.

**2.** Gypsum-based building material according to claim 1, **characterised in that** the ground stock formed of compacted expanded graphite has a bulk density of between 0.12 and 0.25 g/cm$^3$.

**3.** Gypsum-based building material according to claim 1, **characterised in that** the ground stock formed of compacted expanded graphite contains plate-shaped particles having a diameter of between 1 and 5 mm.

**4.** Gypsum-based building material according to claim 1, **characterised in that** ground natural graphite is added to the ground stock formed of compacted expanded graphite.

**5.** Gypsum-based building material according to claim 1, **characterised in that** metal or carbon fibres are added to the ground stock formed of compacted expanded graphite.

**6.** Gypsum-based building material according to claim 1, **characterised in that** said gypsum-based building material is a gypsum filler, gypsum plaster or gypsum screed.

**7.** Method for producing gypsum-based building materials according to claim 1, comprising the steps of:

- producing a graphite intercalation compound,
- thermally expanding the intercalation compound to form expanded graphite,
- compressing the expanded graphite to form a two-dimensional construction having a thickness of between 0.1 and 3 mm, preferably at most 1 mm, and a density of between 0.8 and 1.8 g/cm$^3$,
- grinding the compressed expanded graphite, and
- incorporating the ground stock into a gypsum-based building material in such an amount that the dry-mass-based proportion of the ground stock is from 5 to 50 %.

**8.** Moulding, **characterised in that** it comprises a gypsum-based building material according to claim 1.

**9.** Moulding according to claim 8, **characterised in that** the ground stock formed of compacted expanded graphite has a bulk density of between 0.12 and 0.25 g/cm$^3$.

**10.** Moulding according to claim 8, **characterised in that** the ground stock formed of compacted expanded graphite contains plate-shaped particles having a diameter of between 1 and 5 mm.

**11.** Moulding according to claim 8, **characterised in that** ground natural graphite is added to the ground stock formed of compacted expanded graphite.

**12.** Moulding according to claim 8, **characterised in that** metal or carbon fibres are added to the ground stock formed of compacted expanded graphite.

**13.** Moulding according to claim 8, **characterised in that** said moulding is gypsum boards, gypsum composite boards, gypsum cardboard, gypsum fibreboard, and gypsum non-woven boards.

**14.** Moulding according to claim 8, **characterised in that** said moulding is a composite component formed of at least one moulding which contains a gypsum-based building material, and at least one moulding which does not contain a gypsum-based building material.

**15.** Moulding according to claim 8, **characterised in that** the moulding comprises an impregnation.

**16.** Moulding according to claim 8, **characterised in that** one or more surfaces of the moulding are provided, either completely or in part, with a surface finishing, an overlay, or a coating.

**17.** Moulding according to claim 8, **characterised in that** one or more surfaces of the moulding are laminated, either completely or in part, with paper, wood veneer, metal or plastics films, metal sheets, metal strips, woven materials, or other two-dimensional textile constructions.

**18.** Moulding according to claim 8, **characterised in that** one or more surfaces of the moulding are coated, either in part or completely, with an adhesive, an adhesion promoter, or a binder.

**19.** Moulding according to claim 8, **characterised in that** conduits are embedded in the moulding.

**20.** Use of mouldings according to claim 8 for coating cable shafts.

**21.** Use of mouldings according to claim 8 in floor heating, radiant ceiling heating or panel heating, or air-conditioned ceilings.

**22.** Method for producing mouldings formed of gypsum-based building materials according to claim 8, comprising the steps of:

- producing a graphite intercalation compound,
- thermally expanding the intercalation compound to form expanded graphite,
- compressing the expanded graphite to form a two-dimensional construction having a thickness of between 0.1 and 3 mm, preferably at most 1 mm, and a density of between 0.8 and 1.8 g/cm$^3$,
- grinding the compressed expanded graphite,
- incorporating the ground stock into a gypsum-based building material in such an amount that the dry-mass-based proportion of the ground stock is from 5 to 50 %, and
- producing mouldings from the gypsum-based building material, and optionally other components, containing a dry-mass-based proportion of from 5 to 50 % of the ground stock formed of compressed expanded graphite.

**Revendications**

**1.** Matériau de construction à base de plâtre, **caractérisé en ce que** le matériau de construction à base de plâtre contient du graphite expansé compacté broyé à raison d'une proportion de 5 à 50 %, de préférence de 25 % maximum, rapportée à la masse sèche du matériau de construction.

**2.** Matériau de construction à base de plâtre selon la revendication 1, **caractérisé en ce que** le produit broyé constitué de graphite expansé compacté a une masse volumique apparente comprise entre 0,12 et 0,25 g/cm$^3$.

**3.** Matériau de construction à base de plâtre selon la revendication 1, **caractérisé en ce que** le produit broyé constitué de graphite expansé compacté contient des particules en forme de plaquettes d'un diamètre compris entre 1 et 5 mm.

**4.** Matériau de construction à base de plâtre selon la revendication 1, **caractérisé en ce que** du graphite naturel broyé est mélangé au produit broyé constitué de graphite expansé compacté.

**5.** Matériau de construction à base de plâtre selon la revendication 1, **caractérisé en ce que** des fibres métalliques ou de carbone sont mélangées au produit broyé constitué de graphite expansé compacté.

**6.** Matériau de construction à base de plâtre selon la revendication 1, **caractérisé en ce qu'**il s'agit d'un mastic de plâtre, d'un enduit de plâtre ou d'une chape de plâtre.

**7.** Procédé de fabrication de matériaux de construction à base de plâtre selon la revendication 1, comprenant les étapes suivantes :

fabrication d'un composé d'intercalation du graphite,
expansion thermique du composé d'intercalation en graphite expansé,
compactage du graphite expansé en une structure en nappe d'une épaisseur comprise entre 0,1 et 3 mm, de préférence de 1 mm maximum, et d'une densité comprise entre 0,8 et 1,8 g/cm$^3$,
broyage du graphite expansé compacté,
introduction du produit broyé dans un matériau de construction à base de plâtre à raison d'une quantité telle que la proportion du produit broyé, rapportée à la masse sèche, est comprise entre 5 et 50 %.

**8.** Préformé, **caractérisé en ce qu'**il présente un matériau de construction à base de plâtre selon la revendication 1.

**9.** Préformé selon la revendication 8, **caractérisé en ce que** le produit broyé constitué de graphite expansé compacté a une masse volumique apparente comprise entre 0,12 et 0,25 g/cm$^3$.

**10.** Préformé selon la revendication 8, **caractérisé en ce que** le produit broyé constitué de graphite expansé compacté contient des particules en forme de plaquettes d'un diamètre compris entre 1 et 5 mm.

**11.** Préformé selon la revendication 8, **caractérisé en ce que** du graphite naturel broyé est mélangé au produit broyé constitué de graphite expansé compacté.

**12.** Préformé selon la revendication 8, **caractérisé en ce que** des fibres métalliques ou de carbone sont mélangées au produit broyé constitué de graphite expansé compacté.

13. Préformé selon la revendication 8, **caractérisé en ce qu'**il s'agit de plaques de plâtre, de plaques composites de plâtre, de plaques de placoplâtre, de plaques de plâtre avec fibres, de plaques de plâtre avec non-tissé.

14. Préformé selon la revendication 8, **caractérisé en ce qu'**il s'agit d'un élément de construction composite constitué d'au moins un préformé qui contient un matériau de construction à base de plâtre, et constitué d'au moins un préformé qui ne contient pas de matériau de construction à base de plâtre.

15. Préformé selon la revendication 8, **caractérisé en ce que** le préformé présente une imprégnation.

16. Préformé selon la revendication 8, **caractérisé en ce qu'**une ou plusieurs surfaces du préformé sont complètement ou partiellement munies d'une peinture, d'un revêtement ou d'un habillage.

17. Préformé selon la revendication 8, **caractérisé en ce qu'**une ou plusieurs surfaces du préformé sont partiellement ou complètement doublées avec du papier, un placage en bois, des feuillets en métal ou en matière plastique, des tôles, des bandes métalliques, des tissus ou d'autres structures textiles en nappe.

18. Préformé selon la revendication 8, **caractérisé en ce qu'**une ou plusieurs surfaces du préformé sont partiellement ou complètement revêtues d'une colle, d'un agent adhésif ou d'un liant.

19. Préformé selon la revendication 8, **caractérisé en ce que** des conduites tubulaires sont noyées dans le préformé.

20. Utilisation de préformés selon la revendication 8 pour envelopper des puits à câbles.

21. Utilisation de préformés selon la revendication 8 dans des chauffages par le sol, par le plafond ou par les parois ou dans des plafonds de climatisation.

22. Procédé de fabrication de préformés composés de matériaux de construction à base de plâtre selon la revendication 8, comprenant les étapes suivantes :

fabrication d'un composé d'intercalation du graphite,
expansion thermique du composé d'intercalation en graphite expansé,
compactage du graphite expansé en une structure en nappe d'une épaisseur comprise entre 0,1 et 3 mm, de préférence de 1 mm maximum, et d'une densité comprise entre 0,8 et 1,8 g/cm$^3$,
broyage du graphite expansé compacté,
introduction du produit broyé dans un matériau de construction à base de plâtre à raison d'une quantité telle que la proportion du produit broyé, rapportée à la masse sèche, est comprise entre 5 et 50 %,
fabrication de préformés à partir du matériau de construction à base de plâtre contenant une proportion, rapportée à la masse sèche, de 5 à 50 % de produit broyé constitué de graphite expansé compacté et éventuellement d'autres composants.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9962076 A1
- EP 1512933 A2
- WO 2004065322 A1
- DE 10049230 A